# EUROPÄISCHE PATENTANMELDUNG

(11) **EP 1 197 186 A1**
(43) Veröffentlichungstag der Anmeldung: **17.04.2002**
(21) Anmeldenummer: 01121568.8
(22) Anmeldetag: 10.09.2001
(51) Int. Cl.: A61C 1/08, A61C 1/18

(54) **Medizinisches oder dentalmedizinisches Handstück**

(30) Priorität: 13.09.2000 DE 10045116
(71) Anmelder: KALTENBACH & VOIGT GmbH & Co., 88400 Biberach/Riss (DE)
(72) Erfinder: Schmid, Gerhard, 88441 Mittelbiberach (DE); Baur, Helmut, 88454 Unteressendorf (DE); Grimm, Michael, 89597 Munderkingen (DE); Sailer, Günter, 88471 Laupheim (DE); Wiest, Gebhard, 88454 Hochdorf (DE)
(74) Vertreter: Schmidt-Evers, Jürgen, Dipl.-Ing.

(57) **Zusammenfassung**

Bei einem medizinisches oder dentalmedizinischen Handstück (1) mit einem länglichen Basisteil (3) ist an dessen vorderem Ende ein Behandlungsinstrument (4) abnehmbar gehaltert. Das Behandlungsinstrument (4) weist eine Lichtquelle auf, zu der sich eine elektrische Versorgungsleitung (6a, 6b) erstreckt, wobei an dem Behandlungsinstrument (4) sowie an dem Basisteil (3) in die Stromversorgungsleitung (6a, 6b) eingeschaltete Spulen (7a, 7b) zur induktiven Stromübertragung angeordnet sind. Zum Verändern des Kopplungsgrades zwischen den beiden Spulen (7a, 7b) ist das Behandlungsinstrument (4) gegenüber dem Basisteil (3) in Axialrichtung verschiebbar gehaltert. Hierdurch wird eine Steuerung der Helligkeit der Lichtquelle ermöglicht.

## Beschreibung

Die vorliegende Erfindung betrifft ein medizinisches oder dentalmedizinisches Handstück nach dem Oberbegriff des Anspruches 1, bei dem die Stromversorgung einer an dem vorderen Ende des Handstücks angeordneten Lichtquelle mit Hilfe von Induktionsspulen erfolgt.

Medizinische und insbesondere dentalmedizinische Handstücke weisen oftmals in ihrem vorderen Bereich eine Lichtquelle auf, um den zu behandelnden bzw. zu untersuchenden Bereich auszuleuchten und damit die Sicht für den Zahnarzt zu verbessern. Die Stromversorgung der Lichtquelle erfolgt dabei üblicherweise über in einem Versorgungsschlauch, der an einen zahnärztlichen Behandlungsplatz angeschlossen ist, angeordnete Stromleitungen. Der Versorgungsschlauch weist in der Regel neben den Stromleitungen auch andere Medienleitungen auf, beispielsweise zur Zufuhr von Luft oder Wasser. Dabei sind aus hygienischen Gründen die Behandlungsspitzen von dentalmedizinischen Handstücken üblicherweise abnehmbar, da die Behandlungsinstrumente dann leichter gereinigt und desinfiziert werden können, während die möglicherweise recht empfindliche Elektronik innerhalb des Handstücks diesen Belastungen ausgesetzt nicht werden muß. Es sind daher Maßnahmen für eine geeignete Stromübertragung zwischen dem Basisteil des dentalmedizinischen Handstücks sowie dem abnehmbaren Behandlungsinstrument zu treffen.

Eine Möglichkeit besteht darin, Schleifkontakte oder dgl. zu verwenden, die beim Aufsetzen des Behandlungsinstruments auf das Basisteil für einen geeigneten Kontakt sorgen. Hierbei besteht allerdings die Gefahr, daß die Kontakte relativ leicht verschmutzen und damit eine geeignete Stromübertragung nicht mehr gewährleistet ist. In der französischen Offenlegungsschrift FR 2 712 168 A1 wird daher vorgeschlagen, Induktionsspulen zur Stromübertragung zu verwenden. Dabei ist in dem Basisteil sowie in dem Behandlungsinstrument jeweils eine Induktionsspule angeordnet, wobei beim Aufsetzen des Behandlungsinstruments auf das Basisteil beide Spulen ineinandergreifen oder zumindest derart angeordnet werden, daß eine induktive Stromübertragung ermöglicht wird. Da die beiden Spulen beispielsweise in eine Kunststoff-Ummantelung eingebettet sein können, sind bei dieser Lösung keine freiliegenden Kontakte vorhanden, welche verschmutzen könnten. Auf diese Weise kann das Behandlungsinstrument problemlos gereinigt werden.

Der vorliegenden Erfindung liegt die Aufgabe zugrunde, ein Handstück der eben beschriebenen Art anzugeben, bei dem darüber hinaus die Möglichkeit gegeben ist, die Helligkeit der an dem Behandlungsinstrument angeordneten Lichtquelle zu verändern.

Die Aufgabe wird durch ein medizinisches oder dentalmedizinisches Handstück gemäß Anspruch 1 gelöst. Dieses besteht aus einem länglichen Basisteil, an dessen vorderem Ende ein Behandlungsinstrument abnehmbar gehaltert ist, wobei das Behandlungsinstrument eine Lichtquelle aufweist, zu der sich eine elektrische Versorgungsleitung erstreckt. An dem Behandlungsinstrument sowie an dem Basisteil sind in die Stromversorgungsleitung Spulen zur induktiven Stromübertragung eingeschaltet. Erfindungsgemäß ist das Behandlungsinstrument gegenüber dem Basisteil in Axialrichtung verschiebbar gehaltert, wodurch der Kopplungsgrad zwischen den beiden Spulen und damit die der Lichtquelle zugeführte Leistung verändert werden kann. Auf diese Weise wird durch ein einfaches Verändern der Position des Behandlungsinstruments eine Steuerung der Helligkeit ermöglicht.

Weiterbildungen der Erfindung sind Gegenstand von Unteransprüchen. So weist das Handstück vorzugsweise am vorderen Ende des Basisteils eine Aufnahmehülse für das Behandlungsinstrument auf, wobei diese Aufnahmehülse gegenüber dem Basisteil verschiebbar ist. Insbesondere kann die Aufnahmehülse um die Längsachse des Basisteils verdrehbar sein, wobei ein Verdrehen eine Bewegung in Längsrichtung zur Folge hat. Dies kann beispielsweise durch eine entsprechende Anlaufschräge oder ein Gewinde ermöglicht werden. Dabei kann die Aufnahmehülse zugleich auch die Griffhülse zum Halten des Handstücks bilden.

Vorzugsweise sind die beiden Spulen zur Stromübertragung wendelförmig und koaxial zueinander angeordnet, so daß der Kopplungsgrad von dem Grad der Überlappung der beiden Spulen bestimmt wird. Dabei kann die Bewegbarkeit des Behandlungsinstruments auf einen Bereich zwischen einer ersten Position, in der beide Spulen vollständig überlappen bzw. nebeneinander angeordnet sind, sowie einer zweiten Position, in der beide Spulen nicht mehr überlappen, beschränkt sein.

Um eine Stromübertragung mit Hilfe der beiden Induktionsspulen zu ermöglichen, ist es natürlich notwendig, daß die Stromversorgung mit einer Wechselspannung erfolgt. Dabei besteht allerdings die Möglichkeit, daß bei langen Leitungen von dem Behandlungsplatz zu dem Handstück ein relativ großer Anteil an elektromagnetischer Störstrahlung entsteht. Gemäß einer vorteilhaften Weiterbildung der Erfindung ist daher innerhalb des Basisteils ein Wechselstromgenerator angeordnet, so daß die Stromversorgung von dem Behandlungsplatz zu dem Handstück mit Hilfe von Gleichspannung erfolgen kann. Somit werden Wechselströme nur über relativ kurze Distanzen zu der Lichtquelle geleitet, so daß eine deutlich geringere elektromagnetische Störstrahlung entsteht. Da zahnärztliche Behandlungsplätze ohnehin üblicherweise Gleichstrom zur Verfügung stellen, müssen auch keine besonderen Vorkehrungen zum Einsatz des erfindungsgemäßen Handstücks getroffen werden.

Gemäß einer anderen Weiterbildung der Erfindung, kann das Basisteil zusätzlich ein Schaltelement zum selektiven Ein- oder Ausschalten einer Funktion des Behandlungsinstruments aufweisen. Handelt es sich beispielsweise - wie anhand der nachfolgenden Zeichnungen beschrieben - um ein Saughandstück, so kann mit Hilfe des zusätzlichen Schaltelements der Saugstrom aktiviert oder deaktiviert werden. Zum Aktivieren bzw. Deaktivieren des Schaltelements ist ein Magnet vorgesehen, der an der Aufnahmehülse des Handstücks bewegbar gelagert ist. Dabei kann es sich bei dem Schaltelement beispielsweise um einen Reed-Schalter oder um einen Hall-Sensor handeln.

Im vorliegenden soll die Erfindung anhand der beiliegenden Zeichnungen näher erläutert werden. Es zeigen:
- Fig. 1: ein Ausführungsbeispiel eines erfindungsgemäßen Saughandstücks im Schnitt;
- Fig. 2: das in Figur 1 dargestellte Saughandstück in perspektivischer Darstellung im Teilschnitt;
- Fig. 3: das Saughandstück in Außenansicht;
- Fig. 4a-4c: das in den Figuren 1-3 dargestellte Saughandstück, wobei die Saugkanüle in unterschiedlichen Positionen angeordnet ist; und
- Fig. 5: ein zweites Ausführungsbeispiel eines erfindungsgemäßen Saughandstücks.

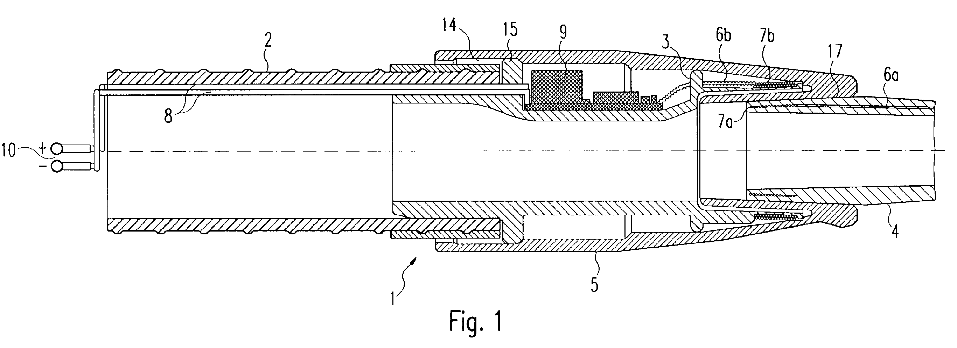

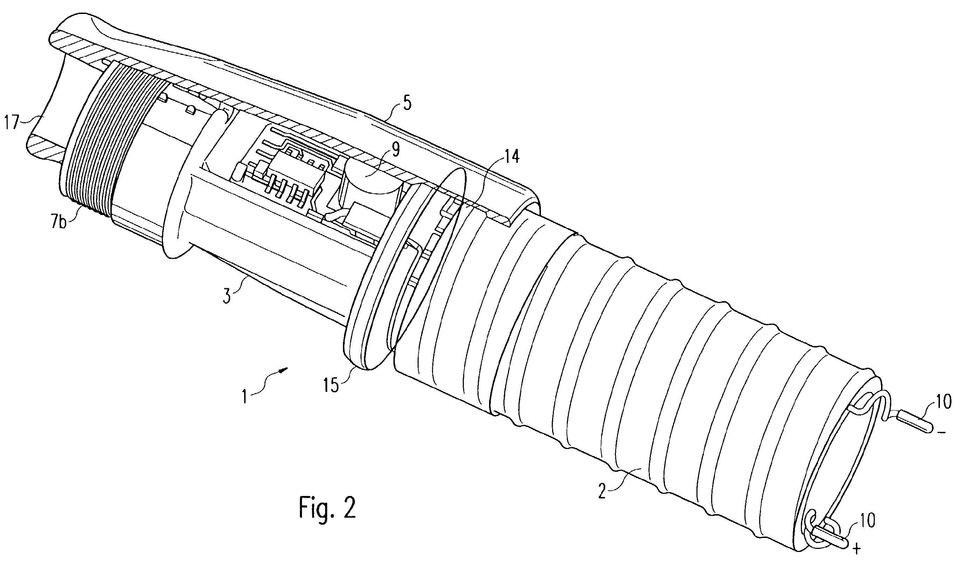

Das in den Figuren 1 und 2 dargestellte Saughandstück 1 besteht aus einem länglichen zylinderförmigen Basisteil 3, an dessen vorderem Ende eine Saugkanüle 4 abnehmbar gehaltert ist. Die Halterung der Saugkanüle 4 erfolgt durch eine zylinderförmige Aufnahmehülse 5, welche das Basisteil 3 umgibt und an ihrem vorderen Ende eine sich leicht verjüngende Öffnung 16 aufweist, in welche das konisch geformte Ende der Saugkanüle 4 eingeschoben werden kann.

An seinem hinteren Ende ist das Handstück 1 an einen Versorgungsschlauch 2 angeschlossen, der zu einem zahnärztlichen Behandlungsplatz führt. Innerhalb dieses Schlauches wird ein Unterdruck erzeugt, so daß mit Hilfe der Saugkanüle 4 Speichel oder kleine Partikel abgesaugt werden können. In dem Versorgungsschlauch 2 verlaufen ferner Stromleitungen 8, welche über entsprechende Kontakte 10 zu einer Gleichstromquelle an dem Behandlungsplatz führen. Innerhalb des Basisteils führen die Stromleitungen 8 zu einem Wechselstromgenerator 9, der die Gleichspannung in eine Wechselspannung umsetzt.

Am vorderen Ende der Saugkanüle 4 befindet sich eine nicht dargestellte Lichtquelle, beispielsweise mehrere LED's oder kleine Glühlampen, welche den zu behandelnden Bereich für eine bessere Sicht ausleuchten soll. Die Stromversorgung dieser Lichtquelle erfolgt über in der Saugkanüle 4 sowie in dem Basisteil 3 angeordnete elektrische Versorgungsleitungen 6a bzw. 6b. Beide Versorgungsleitungen 6a, 6b enden jeweils in eine wendelförmige Induktionsspule 7a bzw. 7b, wodurch bei Anlegen einer Wechselspannung eine Stromübertragung von dem Basisteil 3 zu der Lichtquelle an der Spitze der Saugkanüle 4 gewährleistet wird. In Figur 1 befinden sich dabei die beiden Spulen 7a, 7b in einer Position, in der beide vollständig überlappen, so daß eine maximale Stromübertragung gewährleistet wird. Die Verwendung der beiden Induktionsspulen 7a und 7b hat zum Vorteil, daß beide Spulen 7a, 7b vollständig ummantelt sein können, so daß keine freiliegenden Kontakte bestehen, die einerseits ein Sicherheitsproblem darstellen, andererseits aber auch relativ schnell verschmutzen können. Im vorliegenden Fall kann die Saugkanüle 4 auf einfache Weise entnommen und gereinigt werden.

Die Aufnahmehülse 5 dient zugleich auch als Griffhülse zum Halten des Handstücks und weist daher in ihrem vorderen Bereich eine geeignete Profilierung an ihrer Außenseite auf. Erfindungsgemäß kann die Aufnahmehülse 5 und damit die Saugkanüle 4 gegenüber dem Basisteil 3 in Axialrichtung verschoben werden. Dies hat eine Änderung der Anordnung zwischen den beiden Induktionsspulen 7a und 7b zur Folge, so daß der Kopplungsgrad zwischen den beiden Spulen und damit die der in der Saugkanüle 4 angeordneten Lichtquelle zugeführte Leistung verändert werden kann.

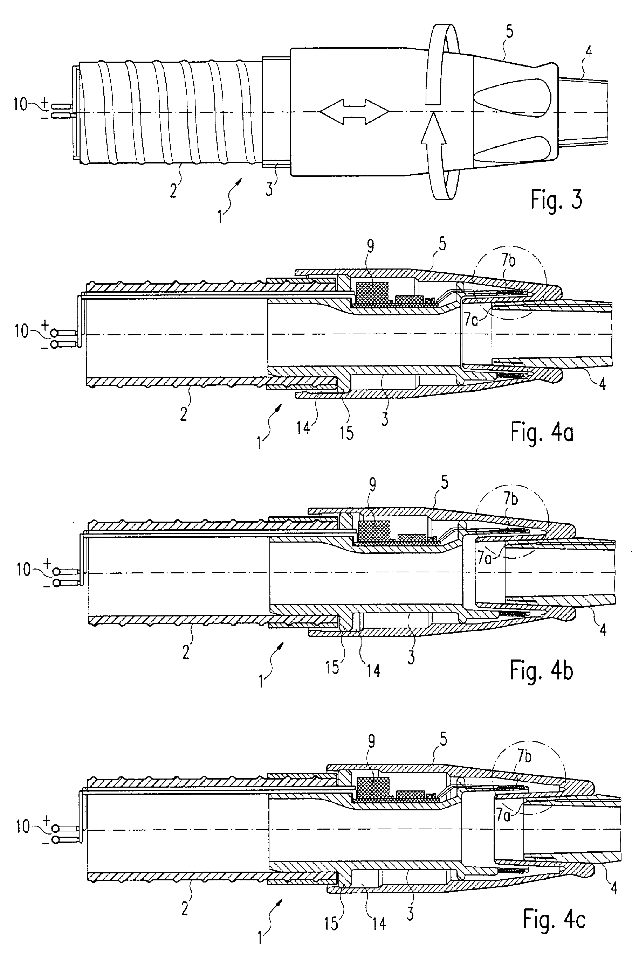

Dies ist näher in den Figuren 3-4c dargestellt. Eine Verschiebung der Aufnahmehülse 5 in Axialrichtung erfolgt durch ein Verdrehen der Hülse 5 gegenüber dem Basisteil 3. Durch ein geeignetes Gewinde bzw. eine Anlaufschräge an der Außenseite des Basisteils sowie der Innenseite der Aufnahmehülse 5 wird gewährleistet, daß ein Verdrehen der Hülse 5 in eine Längsbewegung umgesetzt wird. Die Figuren 4a-4c zeigen dabei verschiedene Positionen der Aufnahmehülse 5.

In Figur 4a findet sich die Aufnahmehülse 5 in einer hinteren Position, d.h. in einer Position, in der die beiden wendelförmigen Induktionsspulen 7a und 7b nebeneinander angeordnet sind und vollständig überlappen. In dieser Stellung wird eine maximale Übertragung des Wechselstroms ermöglicht, so daß die Lichtquelle der Saugkanüle 4 mit maximaler Helligkeit leuchtet. Ein weiteres Zurückbewegen der Aufnahmehülse 5 ist nicht möglich, da ein an der Außenseite des Basisteils 3 angeordneter Ring 15 gegen ein Ende einer an der Innenseite der Aufnahmehülse 5 angeordneten Ausnehmung 14 in Anlage kommt. Die Ausnehmung 14 und der Ring 15 beschränken somit die Bewegbarkeit der Aufnahmehülse 5 in Axialrichtung auf einen vorgegebenen Bereich.

In der in Figur 4b dargestellten Position wurde die Aufnahmehülse 5 ein wenig gegenüber dem Basisteil 3 verdreht und damit um eine gewisse Verschiebung in Axialrichtung nach vorne bewegt. Infolgedessen wurde auch die Saugkanüle 4 und dementsprechend die in ihr angeordnete Induktionsspule 7a verschoben, so daß die beiden Induktionsspulen 7a und 7b nur noch in einem bestimmten Bereich überlappen. In dieser Stellung ist der Kopplungsgrad zwischen den beiden Spulen 7a, 7b reduziert, so daß der Lichtquelle eine geringere Leistung zugeführt wird und diese damit mit geringerer Helligkeit leuchtet.

Wird die Aufnahmehülse 5 weiter verdreht, bewegt sie sich weiter nach vorne, bis der Ring 15 gegen das andere Ende der Ausnehmung 14 in Anlage kommt. In dieser in 4c dargestellten Position befindet sich die in der Saugkanüle 4 angeordnete Induktionsspule 7a vollständig außerhalb der Spule 7b des Basisteils 3, so daß beide Spulen 7a, 7b induktiv entkoppelt sind und keine Stromübertragung stattfindet. Die in der Saugkanüle 4 angeordnete Lichtquelle leuchtet dann nicht. Somit kann auf einfache Weise die Helligkeit der Lichtquelle verändert werden. Dabei besteht die Möglichkeit, anstelle des Verdrehens auch auf andere Art und Weise eine Axialverschiebung der Aufnahmehülse 5 zu erzielen.

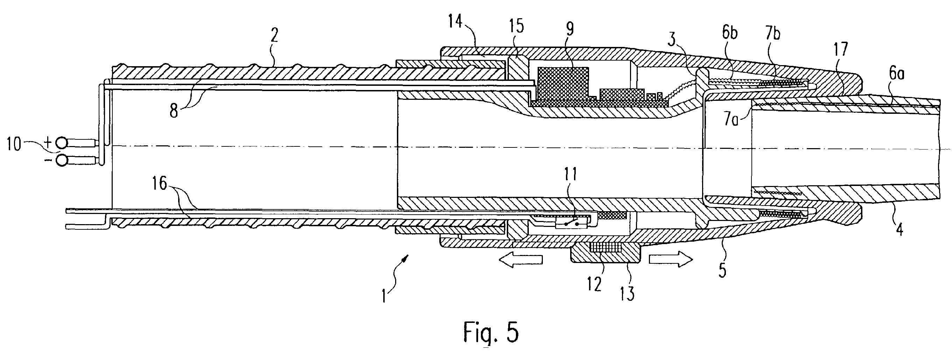

Das in Figur 5 dargestellte Saughandstück ist dem in den Figuren 1-4c dargestellten Handstück sehr ähnlich, weist allerdings noch einen zusätzlichen Schalter auf, durch den eine Funktion des Behandlungsinstruments ein- oder ausgeschaltet werden kann. Beispielsweise kann durch eine Betätigung dieses Schalters der Saugstrom aktiviert bzw. deaktiviert werden. Im dargestellten Beispiel wird der Schalter durch einen in dem Basisteil 3 angeordneten Reed-Schalter 11 gebildet. Zum Schließen dieses Reed-Schalters 11 wird ein innerhalb eines Schiebers 13 angeordneter Magnet 12 über die Schaltzunge des Reed-Schalters 11 bewegt, wodurch diese in Richtung des Magneten 12 gezogen wird und damit der Kontakt hergestellt wird. Das Schließen dieses Schalters wird über zwei Schaltleitungen 16 dem Behandlungsplatz mitgeteilt, so daß die entsprechende Aktion ausgeführt werden kann. Diese kann beispielsweise darin bestehen, den Saugstrom zu aktivieren oder zu deaktivieren. Der den Magnet 12 enthaltene Schieber ist dabei an der Oberseite der Aufnahme- bzw. Griffhülse 5 angeordnet und verschiebbar. Anstelle des hier dargestellten Reed-Schalters 11 könnte auch ein Hall-Sensor verwendet werden.

Das erfindungsgemäße Handstück zeichnet sich dadurch aus, daß durch einfache technische Maßnahmen eine Helligkeitsregelung ermöglicht wird. Darüber hinaus sind weiterhin die Vorteile einer induktiven Stromübertragung gegeben, nämlich ein einfaches Auswechseln und Reinigen des Behandlungsinstruments. Die Erfindung ist dabei nicht auf das vorliegende Beispiel des Saughandstücks beschränkt, sondern kann bei zahlreichen anderen Handstücken, welche an ihrer Behandlungsspitze eine Beleuchtungseinrichtung aufweisen, Verwendung finden.

## Patentansprüche

1. Medizinisches oder dentalmedizinisches Handstück (1) mit einem länglichen Basisteil (3), an dessen vorderem Ende ein Behandlungsinstrument (4) abnehmbar gehaltert ist,
wobei das Behandlungsinstrument (4) eine Lichtquelle aufweist, zu der sich eine elektrische Versorgungsleitung (6a, 6b) erstreckt,
und wobei an dem Behandlungsinstrument (4) sowie an dem Basisteil (3) in die Stromversorgungsleitung (6a, 6b) eingeschaltete Spulen (7a, 7b) zur induktiven Stromübertragung angeordnet sind,
**dadurch gekennzeichnet,**
**daß** zum Verändern des Kopplungsgrades zwischen den beiden Spulen (7a, 7b) das Behandlungsinstrument (4) gegenüber dem Basisteil (3) in Axialrichtung verschiebbar gehaltert ist.

2. Handstück nach Anspruch 1,
**dadurch gekennzeichnet,**
**daß** dieses am vorderen Ende des Basisteils (3) eine Aufnahmehülse (5) für das Behandlungsinstrument (4) aufweist, welche gegenüber dem Basisteil (3) verschiebbar ist.

3. Handstück nach Anspruch 2,
**dadurch gekennzeichnet,**
**daß** die Aufnahmehülse (5) um die Längsachse des Basisteils (3) verdrehbar ist, wobei ein Verdrehen der Aufnahmehülse (5) eine Bewegung in Längsrichtung zur Folge hat.

4. Handstück nach Anspruch 2 oder 3,
**dadurch gekennzeichnet,**
**daß** die Aufnahmehülse (5) zugleich auch eine Griffhülse zum Halten des Handstücks (1) bildet.

5. Handstück nach einem der vorherigen Ansprüche,
**dadurch gekennzeichnet,**
**daß** die beiden Spulen (7a, 7b) wendelförmig sind und koaxial zueinander angeordnet sind.

6. Handstück nach Anspruch 5,
**dadurch gekennzeichnet,**
**daß** die Bewegbarkeit des Behandlungsinstruments (4) auf einen vorgegebenen Bereich zwischen einer ersten Position, in der beide Spulen (7a, 7b) nebeneinander angeordnet sind, und einer zweiten Position, in der beide Spulen (7a, 7b) in Axialrichtung nicht überlappen, beschränkt ist.

7. Handstück nach einem der vorherigen Ansprüche,
**dadurch gekennzeichnet,**
**daß** an dem Basisteil (3) ein Wechselstromgenerator (9) angeordnet und das Handstück (1) an eine Gleichstromquelle anschließbar ist.

8. Handstück nach einem der vorherigen Ansprüche und Anspruch 4,
**dadurch gekennzeichnet,**
**daß** das Basisteil (3) ein Schaltelement (11) zum selektiven Ein- oder Ausschalten einer Funktion des Behandlungsinstruments (4) aufweist,
wobei ein das Schaltelement (11) aktivierender bzw. deaktivierender Magnet (12) an der Aufnahmehülse (5) des Handstücks (1) bewegbar gelagert ist.

9. Handstück nach Anspruch 8,
**dadurch gekennzeichnet,**
**daß** das Schaltelement ein Reedschalter (11) ist.

10. Handstück nach Anspruch 8,
**dadurch gekennzeichnet,**
**daß** das Schaltelement ein Hall-Sensor ist.

11. Handstück nach einem der vorherigen Ansprüche,
**dadurch gekennzeichnet,**
**daß** es sich um ein Saughandstück (1) handelt, wobei das Behandlungsinstrument eine Saugkanüle (4) ist.
